# EUROPÄISCHE PATENTANMELDUNG

(11) **EP 4 759 777 A1**
(43) Veröffentlichungstag der Anmeldung: **17.06.2026**
(21) Anmeldenummer: 24220172.1
(22) Anmeldetag: 16.12.2024
(51) Int. Cl.: C03B 37/012

(54) **VERFAHREN ZUR BEARBEITUNG EINES VORFORM-ROHLINGS, VORFORM UND VORRICHTUNG**

(71) Anmelder: Heraeus Quarzglas GmbH & Co. KG, 63450 Hanau (DE)
(72) Erfinder: LORENZ, Michael, 06803 Bitterfeld-Wolfen (DE)
(74) Vertreter: Heraeus IP

(57) **Zusammenfassung**

Die Erfindung betrifft ein Verfahren zur Bearbeitung eines Vorform-Rohlings, ein Verfahren zur Herstellung einer Vorform, eine Vorform sowie eine Vorrichtung zur Bearbeitung eines Vorform-Rohlings. In einem Verfahren zur Bearbeitung eines Vorform-Rohlings (7) zur Herstellung einer Vorform (1) einer Multi-Kernfaser wird unter Verwendung eines Bohrers (20) eine exzentrische Bohrung (2) in dem Vorform-Rohling (7) hergestellt. Die Bohrung erstreckt sich entlang einer Längserstreckung des Vorform-Rohlings (7). Eine Position des Vorform-Rohlings (7) und/oder des Bohrers (20) wird so gewählt, dass eine während des Bohrens auftretende Drift (D) des Bohrers (20) eine Veränderung einer Position der Bohrung (2) innerhalb eines Querschnitts (14) des Vorform-Rohlings (7) bewirkt, welche in azimutaler Richtung (17) größer ist als in radialer Richtung (18). Auf diese Weise kann die schädliche radiale Driftkomponente minimiert werden und es kann eine Vorform mit besonders hoher Qualität hergestellt werden.

## Beschreibung

Die Erfindung betrifft ein Verfahren zur Bearbeitung eines Vorform-Rohlings zur Herstellung einer Vorform einer Multi-Kernfaser, ein Verfahren zur Herstellung einer Vorform für eine Multi-Kernfaser, eine Vorform für eine Multi-Kernfaser sowie eine Vorrichtung zur Bearbeitung eines Vorform-Rohlings zur Herstellung einer Vorform einer Multi-Kernfaser.

Zur Herstellung optischer Fasern wird zunächst eine Vorform hergestellt, aus der anschließend optische Fasern hergestellt werden. Für die Herstellung der Vorform wird ein Vorform-Rohling gebohrt. Anschließend wird ein Kernstab in die Bohrung eigeführt. Im Falle von Multi-Kernfasern werden mehrere Bohrungen für Kernstäbe in den Vorform-Rohling eingebracht. Es ist notwendig, die Bohrung sehr genau auszuführen, um die Anforderungen an die optischen Eigenschaften der herzustellenden optischen Faser zu erfüllen.

Beim Bohren kommt es zu einer Drift des Bohrers. Einerseits wird der Bohrer mit steigender Länge schwerkraftbedingt nach unten gezogen, was zu einer typischerweise nach unten gerichteten Drift führt. Zudem führen auch andere Effekte zu einer Drift, die in eine beliebige Richtung gerichtet sein kann. Die Drift kann beispielsweise abhängen von der Drehrichtung des Bohrers, der Drehgeschwindigkeit des Bohrers und der Schwerkraftrichtung. Die Effekte können sich überlagern und so zu einer über die Länge der Bohrung veränderlichen Drift führen. Es ist wünschenswert, möglichst lange Bohrungen mit größtmöglicher Genauigkeit herzustellen.

DE102012006410B4 offenbart ein Verfahren zur Herstellung eines Quarzglas-Hohlzylinders, in dem ein in einem Ausgangszylinder eine koaxial zu seiner Mittelachse verlaufende Endbohrung erzeugt. Die sich kontinuierlich verändernde Bohrkopfposition des Bohrkopfs wird mittels einer Messeinrichtung fortlaufend ermittelt und bei einer Abweichung auf eine Sollposition rückgeführt. Dies erfolgt durch Drehen des Ausgangszylinders derart um die Mittelachse wird, dass die Bohrkopfposition wieder oberhalb der Mittelachse gelangt.

EP0777544B1 offenbart ein Verfahren und eine Vorrichtung zur Beeinflussung des Verlaufs von Tieflochbohrungen. Hierbei wird ein Druckstück, also ein separater Körper, zwischen der Bohrstange und der Innenwand der bereits hergestellten Bohrung positioniert. Auf diese Weise wird eine Verbiegung der Bohrstange erreicht und das Bohrwerkzeug wird in eine bestimmte Richtung ausgelenkt.

JP5498086B2 beschreibt ein Tiefbohrverfahren und eine zugehörige Maschine für horizontales Bohren. Eine schwerkraftbedingte Ablenkung des Bohrwerkzeugs nach unten wird gemessen. Eine Steuereinrichtung korrigiert die Position des Spitzenendes des Tieflochbohrwerkzeugs, um die Ablenkung zu kompensieren.

US9272337B2 offenbart ein Verfahren zum Herstellen einer Bohrung durch ein Werkstück mit einem Bohrer durch Überwachen der Bohrerausrichtung und der Bohrungsposition und Einstellen des Bohrweges nach Bedarf. Das Einstellen des Bohrweges beinhaltet das selektive Anlegen eines axialen Impulses an den Bohrer, wenn sich der Bohrer in einer bestimmten azimutalen Ausrichtung befindet. Die Ausrichtung des Bohrers und die Position der Bohrung werden mit einem akustischen Sender und Empfänger überwacht, die mit der gleichen Geschwindigkeit bewegt werden, mit der sich der Bohrer axial durch das Werkstück bewegt.

Es ist die Aufgabe der Erfindung, die Herstellung einer Vorform einer Multi-Kernfaser zu verbessern.

Die Aufgabe wird gelöst durch ein Verfahren zur Bearbeitung eines Vorform-Rohlings gemäß Anspruch 1 sowie durch ein Verfahren zur Herstellung einer Vorform, eine Vorform für eine Multi-Kernfaser und eine Vorrichtung zur Bearbeitung eines Vorform-Rohlings gemäß den nebengeordneten Ansprüchen. Vorteilhafte Ausgestaltungen sind in den Unteransprüchen angegeben.

Zur Lösung der Aufgabe dient ein Verfahren zur Bearbeitung eines Vorform-Rohlings. Der Vorform-Rohling dient der Herstellung einer Vorform einer Multi-Kernfaser. Es wird unter Verwendung eines Bohrers eine exzentrische Bohrung in dem Vorform-Rohling hergestellt, welche sich entlang einer Längserstreckung des Vorform-Rohlings erstreckt. Insbesondere wird eine Position des Vorform-Rohlings und/oder des Bohrers so gewählt, dass eine während des Bohrens auftretende Drift des Bohrers eine Veränderung einer Position der Bohrung innerhalb eines Querschnitts des Vorform-Rohlings bewirkt, welche in azimutaler Richtung größer ist als in radialer Richtung.

Gemäß der Erfindung wird nicht versucht, die beim Bohren auftretende Drift zu verhindern, sondern die Drift in eine Richtung zu lenken, die weniger schädlich für die herzustellende Multi-Kernfaser ist. Es hat sich gezeigt, dass eine Drift, die in azimutaler Richtung größer ist als in radialer Richtung, signifikant weniger schädlich ist als eine Drift in radialer Richtung. Auf diese Weise kann mit geringem Aufwand eine qualitativ besonders hochwertige Vorform für eine Multi-Kernfaser und in der Folge eine besonders hochwertige Multi-Kernfaser hergestellt werden kann.

Es wird unter Verwendung eines Bohrers eine Bohrung hergestellt. Der Bohrer ist insbesondere ein rotierender Bohrer. Der Bohrer umfasst insbesondere einen Bohrkopf und/oder eine Bohrstange zum Antreiben des Bohrkopfes. Die Bohrstange wird üblicherweise von einem Motor angetrieben. Die Bohrung kann durch Herstellen einer Sackbohrung und insbesondere Abtrennen eines nicht durchbohrten Endes des jeweiligen Vorform-Rohlings erfolgen, beispielsweise durch Sägen. Auf diese Weise kann eine Durchgangsbohrung hergestellt werden. Bei der Herstellung der Sackbohrung wird der Bohrer relativ zum Vorform-Rohling von einer initialen Bohrposition zu einer Endposition verschoben. Das Bohren erfolgt insbesondere als stoßendes Bohren, also mittels Vorschieben eines freien Endes des Bohrers, insbesondere des Bohrkopfs des Bohrers, in den Vorform-Rohling. Ein ziehendes Bohren ist allerdings nicht ausgeschlossen. Der Bohrer tritt insbesondere an einer ersten Endfläche in den Vorform-Rohling ein. Insbesondere erfolgt das Bohren, bis der Bohrer eine Position vor der an der gegenüberliegenden Seite befindlichen zweiten Endfläche erreicht hat. Das Bohren erfolgt insbesondere in einen zumindest im Bereich der einzubringenden Bohrung massiven Vorform-Rohling. Es ist jedoch nicht ausgeschlossen, dass beim Bohren eine vorhandene, beispielsweise zuvor eingebrachte Bohrung erweitert wird.

Ein Vorform-Rohling kann massiv oder zumindest teilweise hohl sein. Es können beim Herstellen einer Bohrung bereits eine oder mehrere zentrische und/oder exzentrische Bohrungen vorhanden sein, wobei die eine oder mehreren Bohrungen insbesondere entlang der Längserstreckung verlaufen. Es kann eine zentrale Bohrung entlang der Mittellängsachse vorhanden sein. Der Vorform-Rohling ist zum Beispiel aus Quarzglas, insbesondere aus synthetischem Quarzglas, hergestellt.

Eine exzentrische Bohrung befindet sich außermittig in Bezug zu einem Querschnitt des Vorform-Rohlings. Der Mittelpunkt der Bohrung weist demnach einen Abstand vom Mittelpunkt des Querschnitts auf. Die exzentrische Bohrung verläuft typischerweise auch nicht durch die Mittellängsachse des Vorform-Rohlings. Bei einem kreisförmigen Querschnitt ist der Mittelpunkt des Querschnitts der Kreismittelpunkt. Bei einem Querschnitt mit kreisförmiger Grundform kann der Mittelpunkt der Grundform als Mittelpunkt dienen. Bei nicht-kreisförmigen Querschnitten kann der Schwerpunkt als Mittelpunkt dienen Insbesondere werden mehrere Bohrungen hergestellt, die im Querschnitt gesehen auf einem Kreis liegen, der als Lochkreis bezeichnet wird. Insbesondere sind die Bohrungen auf dem Kreis gleichmäßig verteilt.

Eine Bohrung verläuft entlang der Längserstreckung des Vorform-Rohlings. Insbesondere verläuft die Bohrung von einer ersten Endfläche oder Stirnseite des Vorform-Rohlings zu einer zweiten Endfläche oder Stirnseite des Vorform-Rohlings. Grundsätzlich ist es wünschenswert, dass eine herzustellende Bohrung parallel zur Mittellängsachse des Vorform-Rohlings in einem Abstand zur Mittellängsachse verläuft. Allerdings ist dies durch die Drift nicht exakt möglich.

Eine Multikernfaser ist eine Kernfaser mit mehreren Kernen. Die konkrete Anzahl der Kerne ist für das Verfahren unerheblich. Beispielsweise kann die Multikernfaser zwei, vier oder mehr Kerne aufweisen.

Insbesondere ist der Vorform-Rohling länglich, beispielsweise zylinderförmig. Der Querschnitt des Vorform-Rohlings ist demnach über die gesamte Längserstreckung gleich. In einer Ausführungsform ist der Vorform-Rohling kreiszylinderförmig.

In einer Ausführungsform hat der Vorform-Rohling eine kreiszylinderförmige Grundform. Kreiszylinderförmige Grundform meint, dass gewisse Abweichungen von der exakten Kreiszylinderform zulässig sind. In einem Beispiel kann der Vorform-Rohling eine kreiszylinderförmige Grundform haben, aber durch eine Abflachung von der exakten Kreiszylinderform abweichen. Die Abflachung kann sich über die gesamte Länge des Vorform-Rohlings erstrecken und/oder parallel zur Längsachse ausgerichtet sein. Eine Abflachung kann etwa zur Markierung vorhanden sein. In einem anderen Beispiel kann der Vorform-Rohling eine kreiszylinderförmige Grundform aufweisen, aber eine oder zwei schräge Endflächen aufweisen.

Die Drift des Bohrers tritt innerhalb des Vorform-Rohlings auf und führt zu einer Veränderung der Position der Bohrung innerhalb des Querschnitts des Vorform-Rohlings. Die Lage der Bohrung verändert sich also über die Längserstreckung des Vorform-Rohlings. Mit anderen Worten "wandert" die Bohrung. Die Drift führt zu einer Abweichung der tatsächlichen Position des Bohrers bzw. der Bohrung von der SollPosition, und zu einer Abweichung des Bohrers von seiner Startposition. Die Position des Vorform-Rohlings und/oder des Bohrers kann so gewählt werden, dass eine während des Bohrens auftretende Drift des Bohrers eine Veränderung einer Position der Bohrung innerhalb eines Querschnitts des Vorform-Rohlings bewirkt, welche in azimutaler Richtung größer ist als in radialer Richtung. Beispielsweise kann eine Position des Vorform-Rohlings und/oder des Bohrers in Bezug zur Schwerkraftrichtung gewählt werden.

Beginnt die Bohrung beispielsweise an der ersten Endfläche an einer Position in der Mitte zwischen dem Mittelpunkt des Querschnitts und der 12-Uhr-Position am Außenrand des Vorform-Rohlings, verschiebt sich der Bohrer davon ausgehend mit fortlaufender Länge der Bohrung in eine bestimmte Richtung, beispielsweise nach oben rechts. Am Ende der Bohrung an der zweiten Endfläche befindet sich der Bohrer dann bei gleicher Blickrichtung näher am Außenrand und weiter rechts. In diesem Fall ändert sich die Position der Bohrung im Querschnitt der Bohrung sowohl in azimutaler Richtung als auch in radialer Richtung. Die radiale Richtung meint die Richtung ausgehend vom Mittelpunkt des Querschnitts nach außen. Die azimutale Richtung oder Umfangsrichtung meint eine Winkelposition bezogen auf eine Drehung um den Mittelpunkt bzw. die Mittellängsachse.

Die Änderung der Position in radialer Richtung, auch als Radialkomponente der Drift bezeichnet, hat Nachteile. Zur Herstellung von Multi-Kernfasern werden typischerweise mehrere exzentrische Bohrungen hergestellt. Diese sind im Querschnitt des Vorform-Rohlings insbesondere gleichmäßig beabstandet auf einem konzentrischen und/oder zur Mittellängsachse koaxialen Lochkreis angeordnet. Die radiale Drift führt dazu, dass der Durchmesser des Kreises sich über die Länge des Vorform-Rohlings verändert. Damit ist die Position der Kernstäbe in der daraus hergestellten Faser nicht mehr konstant, sondern die Kernabstände ändern sich, was zu optischen Verlusten der Faser, aber auch Spliceverlusten führt und die Performance der Faser beeinträchtigt. Es hat sich dagegen gezeigt, dass die Änderung der Position in azimutaler Richtung oder Azimutalkomponente der Drift nicht zu den beschriebenen Nachteilen führt. Dadurch, dass die Position der Bohrung in azimutaler Richtung größer ist als in radialer Richtung, werden die Nachteile mit vertretbaren Aufwand minimiert. Es kann eine qualitativ hochwertige Multi-Kernfaser hergestellt werden.

Um zu erreichen, dass die Drift in einer bestimmten Richtung in Bezug zum Querschnitt verläuft, wird eine geeignete Position des Vorform-Rohlings und/oder des Bohrers gewählt. Es kann zum Beispiel die Position eingestellt werde, an welcher der Bohrer den Vorform-Rohling kontaktiert, also die relative Position des Bohrers zum Vorform-Rohling. Diese Position kann Einfluss darauf haben, wie die Drift innerhalb des Querschnitts verläuft. Beispielsweise kann sich gezeigt haben, dass die Drift unter bestimmten Bedingungen nach rechts oben in Richtung 2 Uhr verläuft. Wenn nun als Position, an welcher der Bohrer den Vorform-Rohling kontaktiert, links oben in Richtung 10 Uhr in Bezug zum Mittelpunkt des Querschnitts gewählt wird, verläuft die resultierende Drift im Wesentlichen in azimutaler Richtung oder führt, in anderen Worten, zu einer Veränderung der Position entlang der Umfangsrichtung.

Die Einstellung der Position, an welcher der Bohrer den Vorform-Rohling kontaktiert, kann beispielsweise durch eine gemeinsame Ausrichtung des Vorform-Rohlings und des Bohrers im Raum gewählt bzw. eingestellt werden. Die gemeinsame Ausrichtung im Raum meint insbesondere eine Positionierung des Bohrers und des Vorformlings im Raum derart, dass der Bohrer so in Bezug zur ersten Endfläche angeordnet ist, dass durch ein Verschieben des Bohrers und/oder des Vorform-Rohlings entlang einer Längsachse des Bohrers und/oder des Vorform-Rohlings, insbesondere einer gemeinsamen Längsachse, die Bohrung an der gewünschten Stelle erzeugt werden kann. Der Bohrer ist grundsätzlich zumindest im Wesentlichen parallel und insbesondere parallel zum Vorform-Rohling ausgerichtet. Beispielsweise kann der Bohrer vor der ersten Endfläche positioniert werden.

Es kann besonders vorteilhaft sein, den Vorform-Rohling zu positionieren und/oder zu bewegen und den Bohrer ortsfest zu belassen. So ist es nicht notwendig, Komponenten des Bohrers wie Bohrbuchse, Führungslünetten und/oder Antriebseinheit zu bewegen.

Es wird eine bestimmte Position des Vorform-Rohlings und/oder des Bohrers gewählt. Insbesondere wird die Position des Vorform-Rohlings und/oder des Bohrers zudem eingestellt. In einem Ausführungsbeispiel wird der Vorform-Rohling relativ zum Bohrer bewegt, um die Position einzustellen. In einem Ausführungsbeispiel wird der Bohrer relativ zum Vorform-Rohling bewegt, um die Position einzustellen. In einem Ausführungsbeispiel werden sowohl der Vorform-Rohling als auch der Bohrer bewegt, um die Position einzustellen. Das Bewegen des Bohrers meint eine andere Bewegung als die Rotation um die Längsachse beim Bohren, also insbesondere eine zusätzliche Bewegung.

Hierbei kann in einer ersten Variante eine Relativbewegung zwischen Vorform-Rohling und Bohrer erfolgen, wie oben beschrieben. Das ist aber nicht notwendig. Es kann in einer zweiten Variante auch eine gleichartige Bewegung des Vorform-Rohlings und des Bohrers erfolgen, bei der die relative Position zwischen dem Vorform-Rohling und dem Bohrer nicht verändert wird. Beispielsweise kann sich der Bohrer dabei kurz vor einer Endfläche des Vorform-Rohlings über der Position befinden, an der die Bohrung hergestellt werden soll. Beispielsweise kann eine gemeinsame Positionierung in Bezug zur Mittellängsachse des Vorform-Rohlings erfolgen, etwa durch Drehung um die Mittellängsachse, um eine gemeinsame Position im Raum bzw. in Bezug zur Schwerkraftrichtung einzustellen.

Die konkrete Position des Vorform-Rohlings und/oder des Bohrers kann nicht für alle Bohrungen einheitlich definiert werden, da sie von der Drift abhängt, die typischerweise von den konkreten Rahmenbedingungen abhängt. Die Drift kann beispielsweise abhängen von der Drehrichtung des Bohrers, der Drehgeschwindigkeit des Bohrers, der Bohrtiefe und/oder der Schwerkraftrichtung.

Das Verfahren dient zur Bearbeitung eines Vorform-Rohlings durch Bohren. Es wird ein bearbeiteter Vorform-Rohling hergestellt. Sind alle Bohrungen im Vorform-Rohling hergestellt und optional weitere Schritte erfolgt, etwa das Einbringen der Kernstäbe, liegt eine Vorform einer Multi-Kernfaser vor. Aus der Vorform kann dann eine Multi-Kernfaser hergestellt werden.

Insbesondere wird das Verfahren so durchgeführt, dass im Falle eines Vorform-Rohlings mit einem Außendurchmesser von 200 mm die Veränderung der Position der Bohrung in radialer Richtung maximal ± 0,3 mm beträgt. Insbesondere wird das Verfahren so durchgeführt, dass die Veränderung der Position der Bohrung in radialer Richtung maximal ± 0,15% des Außendurchmessers beträgt.

Das Verfahren kann das Herstellen einer Multi-Kernfaser aus der Vorform umfassen. Insbesondere wird das Verfahren so durchgeführt, dass die Veränderung der Position der Bohrung in radialer Richtung in der hergestellten Multi-Kernfaser weniger ist als 200 nm.

In einer Ausgestaltung sind der Vorform-Rohling und der Bohrer beim Bohren, also beim Herstellen der Bohrung, im Wesentlichen horizontal ausgerichtet. Horizontales Bohren benötigt eine wesentlich geringere Raumhöhe und ist somit in der Regel einfacher umsetzbar. Durch die erfindungsgemäße Wahl der Position kann trotz der verstärkten Drift beim horizontalen Bohren dennoch eine maximale Genauigkeit erreicht werden.

In einer Ausgestaltung umfasst das Verfahren ferner ein Einstellen einer gewünschten Drehposition des Vorform-Rohlings und des Bohrers um eine Längsachse, insbesondere eine Mittellängsachse, des Vorform-Rohlings. Insbesondere wird eine Drehposition des Vorform-Rohlings und/oder des Bohrers in Bezug zur Längsachse verändert, um die Drift in die gewünschte Richtung zu lenken. Eine Drehposition meint eine Position, bei der der Vorform-Rohling bzw. der Bohrer in einem bestimmten Winkel in Bezug zur jeweiligen Achse angeordnet ist. Die Veränderung der Drehposition kann durch Drehen um die Längsachse oder um eine dazu parallele Achse erfolgen.

In einer Ausführungsform wird der Bohrer und/oder der Vorform-Rohling bewegt, um die Drehposition einzustellen. In einer Ausführungsform wird der Bohrer und/oder der Vorform-Rohling um die Längsachse gedreht. Hierdurch kann eine Position des Bohrers und des Vorform-Rohlings in Bezug zur Schwerkraftrichtung eingestellt werden. So kann die schwerkraftbedingte Drift in eine gewünschte Richtung gelenkt werden.

In einer Ausgestaltung ist die Position des Vorform-Rohlings und des Bohrers so, dass sich der Bohrer in Bezug zur Schwerkraftrichtung in einer anderen Position befindet als genau oberhalb einer Mittellängsachse des Vorform-Rohlings. Mit anderen Worten ist der Bohrer nicht genau oberhalb der Mittellängsachse des Vorform-Rohlings. Bevorzugt beträgt ein Winkel, ausgehend von der Mittellängsachse, zwischen der Senkrechten und der Position des Bohrers mindestens 10°, insbesondere mindestens 20°. Beispielsweise befindet sich die relative Position des Bohrers und/oder des Vorform-Rohlings in Bezug zur Schwerkraftrichtung zwischen 9 Uhr und 12 Uhr, beispielsweise zwischen 9:30 Uhr und 11:30 Uhr, in einer Ausführungsform zwischen 10 Uhr und 11 Uhr.

Es hat sich gezeigt, dass die Drift häufig nicht nur senkrecht nach unten wirkt, sondern zusätzlich oder sogar hauptsächlich in eine andere Richtung. Die außermittige Position des Bohrers kann somit besonders effektiv bewirken, dass die resultierende Drift in eine geeignete Richtung gelenkt wird.

In einer Ausgestaltung wird die zu wählende Position des Vorform-Rohlings und des Bohrers anhand zumindest einer zuvor ermittelten Richtung der Drift ermittelt wird.

Die vorherige Ermittlung der Drift kann beispielsweise durch Abschätzen, basierend auf Erfahrungswerten und/oder basierend auf Messwerten erfolgen. Beispielsweise kann auf Erfahrungen bei ähnlichen Bedingungen zurückgegriffen werden, bei denen z. B. derselbe Bohrer, dasselbe Material, dieselbe Bohrposition, dieselbe Drehgeschwindigkeit und/oder dieselbe Vorschubgeschwindigkeit, etc., genutzt worden ist. Mit anderen Worten wird der zu erwartende Bohrverlauf im Vorfeld ermittelt und als Input verwendet, um die gewünschte Position des Vorform-Rohlings und/oder des Bohrers zu wählen. Die Ermittlung der Drift kann auch durch Durchführen einer Probebohrung erfolgen.

In einer Ausgestaltung wird vor dem Herstellen der Bohrung eine Probebohrung in einem Probe-Vorform-Rohling hergestellt und zumindest eine Richtung der Drift bei der Probebohrung ermittelt.

Die ermittelte Richtung wird dann zur Wahl der jeweiligen Position verwendet. Wenn also beispielsweise ausgehend von dem Startmittelpunkt des Bohrlochs eine Drift nach rechts oben in Richtung 2 Uhr erfolgt, kann die Position des Vorform-Rohlings und/oder des Bohrers so gewählt werden, dass der Vorform-Rohling und Bohrer - ausgehend von der Position bei der Probebohrung - um 60° z. B. um die Mittellängsachse des Vorform-Rohlings gegen den Uhrzeigersinn verdreht sind. Auf diese Weise führt die resultierende Drift zu einer Veränderung der Position entlang der Umfangsrichtung. Die Veränderung der Position in radialer Richtung wird minimal. Diese Einstellung kann durch Bewegen, beispielsweise durch Verschieben und/oder Drehen, des Vorform-Rohlings und/oder des Bohrers erfolgen. Beispielsweise können Vorform-Rohling und Bohrer gemeinsam um die Mittellängsachse, eine dazu parallele Achse und/oder eine horizontale Achse gedreht werden.

Insbesondere wird die Probebohrung mit demselben Bohrer hergestellt. Insbesondere ist der Probe-Vorform-Rohling zumindest im Wesentlichen aus dem gleichen Material hergestellt wie der Vorform-Rohling. Insbesondere werden andere Parameter analog gewählt, wie z. B. die Bohrposition, die Drehgeschwindigkeit und/oder die Vorschubgeschwindigkeit, etc.

Es können nach Ermittlung der Richtung der Drift in einer Probe-Bohrung unter Verwendung der ermittelten Position des Vorform-Rohlings und/oder des Bohrers eine Vielzahl von Bohrungen hergestellt werden.

In einer Ausgestaltung wird zwischen der Herstellung eines ersten Abschnitts der Bohrung und der Herstellung eines zweiten Abschnitts der Bohrung die Position des Vorform-Rohlings und/oder des Bohrers verändert wird. In einer Ausführungsform bleibt die relative Position zwischen dem Vorform-Rohling und dem Bohrer gleich. Die Veränderung der Position kann durch Drehen des Vorform-Rohlings und des Bohrers erfolgen, beispielsweise um eine parallele zur Mittellängsachse verlaufende Achse, z. B. um die Mittellängsachse selbst. Die Bewegung des Vorform-Rohlings und des Bohrers kann grundsätzlich zumindest zeitabschnittsweise zeitgleich, beispielsweise gemeinsam, oder nacheinander erfolgen. Die gemeinsame Bewegung hat den Vorteil, dass das Bohrverfahren nicht oder nur minimal unterbrochen werden muss. Der Bohrer muss nicht aus dem fertiggestellten Abschnitt der Bohrung entfernt werden.

Die Abschnitte der Bohrung liegen axial hintereinander. Die Abschnitte der Bohrung werden zeitlich nacheinander ausgeführt. Es erfolgt zwischen zwei Abschnitten der Bohrung eine Änderung der Position. Die Veränderung der Position kann erfolgen, während der Bohrer inaktiv ist. Die Veränderung der Position kann erfolgen, während der Bohrer bohrt. In einem Ausführungsbeispiel wird die Bohrung in drei oder mehr Abschnitten ausgeführt, zwischen denen jeweils eine Änderung der Position erfolgt, beispielsweise vier, fünf, sechs, acht oder zehn Abschnitte.

Die zwischenzeitliche Veränderung der Position kann eine zwischenzeitlich veränderten Driftrichtung ausgleichen. So kann der Anteil der radialen Drift besonders effektiv minimiert werden. Beispielsweise wird der Anteil der schwerkraftbedingten, nach unten gerichteten Drift erst bei größeren Bohrlängen wirksam. Dieser kann gezielt ausgeglichen werden und es können längere Bohrungen mit hoher Genauigkeit hergestellt werden.

In einer weiteren Ausgestaltung wird zumindest zeitabschnittsweise zeitgleich mit der Herstellung der Bohrung die gemeinsame Position des Vorform-Rohlings und des Bohrers im Raum verändert. Es werden also während des Bohrens gleichzeitig die Position des Vorform-Rohlings im Raum verändert und die Position des Bohrers im Raum verändert. Insbesondere werden der Vorform-Rohling und der Bohrer um eine Achse, die parallel zu einer Längsachse des Vorform-Rohlings und/oder des Bohrers ist, bzw. um eine horizontale Achse gedreht.

Es wird ein kontinuierliches Verfahren bereitgestellt, bei dem die Drift zu jedem Zeitpunkt so beeinflusst wird, dass der schädliche radiale Anteil minimiert wird. So kann die Aufgabe verbessert gelöst werden.

In einer Ausgestaltung wird nach der Herstellung der Bohrung der Vorform-Rohling um seine Längsachse, insbesondere seine Mittellängsachse, relativ zum Bohrer gedreht. Insbesondere wird anschließend eine weitere Bohrung hergestellt. Insbesondere erfolgt eine Drehung des Vorform-Rohlings. Auf diese Weise können nacheinander mehrere exzentrische Bohrungen hergestellt werden. So kann besonders effektiv eine Vorform hergestellt werden. Die Position des Vorform-Rohlings und/oder des Bohrers zur Beeinflussung der Drift kann zwischen und/oder während der einzelnen Bohrungen gleich bleiben oder verändert werden.

In einer Ausgestaltung wird die Position des Vorform-Rohlings und/oder des Bohrers im Raum so gewählt, dass die Veränderung der Position der Bohrung in azimutaler Richtung um einen Faktor von wenigstens 2, insbesondere wenigstens 4, größer ist als in radialer Richtung.

Der Faktor ist insbesondere wenigstens 3, bevorzugt wenigstens 5. In einer Ausführungsform beträgt der Faktor wenigstens 7, wenigstens 10 und in einem Beispiel wenigstens 15. So kann eine besonders geringe radiale Drift eingestellt werden.

In einer Ausgestaltung beträgt ein Verhältnis einer Länge des Vorform-Rohlings zu einem Durchmesser der Bohrung mehr als 10, insbesondere mehr als 20. Das Verhältnis kann größer als 30, beispielsweise größer als 35 sein. das Verhältnis kann größer als 40 oder also 50 sein. Mit steigendem Verhältnis der Länge der Vorform zum Durchmesser der Bohrung erhöht sich die Drift, die der erforderlichen Genauigkeit entgegenwirkt. Durch die erfindungsgemäße Lösung sind derartige Verhältnisse bei großer Genauigkeit möglich. Derartige Verhältnisse gewährleisten eine kurze Bearbeitungszeit und geringe Rüstzeiten.

Ein weiterer Aspekt der Erfindung ist ein Verfahren zur Herstellung einer Vorform für eine Multi-Kernfaser, umfassend das erfindungsgemäße Verfahren. Insbesondere werden mehrere exzentrische Bohrungen hergestellt. Das Verfahren kann das Einführen von Kernstäben in die Bohrungen umfassen. Alle Vorteile, Merkmale, und Ausgestaltungen des eingangs beschriebenen Verfahrens können analog für dieses Verfahren gelten und umgekehrt.

Ein weiterer Aspekt der Erfindung ist eine Vorform für eine Multi-Kernfaser, die mit dem erfindungsgemäßen Verfahren hergestellt oder herstellbar sein kann. Die Vorform enthält eine exzentrische Bohrung, die sich entlang einer Längserstreckung der Vorform erstreckt. Eine Position der Bohrung ändert sich innerhalb eines Querschnitts der Vorform über die Längserstreckung der Vorform. Der Querschnitt der Vorform entspricht dem Querschnitt des Vorform-Rohlings. Eine im Querschnitt der Vorform betrachtete Veränderung der Position ist in azimutaler Richtung größer ist als in radialer Richtung. Dies ermöglicht einen im Wesentlichen gleichbleibenden Abstand zwischen mehreren exzentrischen Bohrungen. Die Vorform kann in die Bohrungen eingeführte Kernstäbe umfassen. Alle Vorteile, Merkmale, und Ausgestaltungen der eingangs beschriebenen Verfahren können analog für die Vorform gelten und umgekehrt.

Insbesondere befinden sich sowohl der Anfang als auch das Ende der Bohrung im jeweiligen Querschnitt auf einem Lochkreis mit demselben Durchmesser. Insbesondere befindet sich jeder Punkt zwischen dem Anfang und dem Ende der Bohrung auf einem jeweiligen Kreis mit demselben Durchmesser. In dieser idealen Ausführungsform erfolgt die Drift ausschließlich in azimutaler Richtung und die Drift in radialer Richtung ist null. Die Veränderung der Position der Bohrung wird im Querschnitt, also quer zur Längserstreckung, gemessen. Die Änderung der Position der Bohrung ändert sich insbesondere kontinuierlich, also nicht sprunghaft.

In einer Ausführungsform beträgt eine Länge der Vorform mehr als 1,5 m, insbesondere wenigstens 2,0 m. Die Länge kann wenigstens 2,5 m betragen. Eine solche Länge kann mit dem erfindungsgemäßen Verfahren mit der erforderlichen Genauigkeit hergestellt werden.

In einer Ausführungsform enthält die Vorform mindestens zwei exzentrische Bohrungen, die sich entlang der Längserstreckung der Vorform erstrecken und deren Positionen sich innerhalb des Querschnitts über die Längserstreckung der Vorform ändern. Insbesondere ist ein im Querschnitt gemessener Abstand zwischen den Bohrungen über die Längserstreckung im Wesentlichen konstant. Die Bohrungen können ein Stück weit gegeneinander verdrillt sein, was sich als nicht schädlich für die optische Faser erwiesen hat.

In einer Ausgestaltung ist ein Abstand zwischen einer Mittellängsachse der Vorform und einem Mittelpunkt der Bohrung an einer ersten Endfläche der Vorform und an einer der ersten Endfläche gegenüberliegenden zweiten Endfläche der Vorform im Wesentlichen gleich. Mit anderen Worten ist die Veränderung der Position der Bohrung in radialer Richtung ungefähr null. Eine Abweichung von maximal 1 %, insbesondere maximal 0,5% oder maximal 0,2% des Durchmessers des Vorform-Rohlings kann zulässig sein.

Bevorzugt ist die Veränderung in radialer Richtung um einen Faktor von wenigstens 2, insbesondere wenigstens 4, kleiner als die Veränderung in azimutaler Richtung.

In einer weiteren Ausgestaltung enthält die Vorform mindestens zwei exzentrische Bohrungen, die sich entlang der Längserstreckung der Vorform erstrecken. Die Positionen der Bohrungen ändern sich über die Längserstreckung der Vorform innerhalb des Querschnitts der Vorform in gleicher Richtung entlang einer gekrümmten Linie um eine Mittellängsachse der Vorform. Die gekrümmte Linie kann im Idealfall eine Kreisbahn sein. Insbesondere sind Abstände zwischen zwei benachbarten Bohrungen über die Länge der Vorform im Wesentlichen konstant. Eine Abweichung von maximal 5%, insbesondere maximal 2% oder maximal 1% des Durchmessers des Vorform-Rohlings kann zulässig sein.

Ein weiterer Aspekt der Erfindung ist eine Vorrichtung zur Bearbeitung eines Vorform-Rohlings. Der Vorform-Rohling dient der Herstellung einer Vorform einer Multi-Kernfaser. Die Vorrichtung umfasst eine Halteeinrichtung zum Halten eines Vorform-Rohlings, einen Bohrer zum Herstellen einer exzentrischen Bohrung in dem Vorform-Rohling und eine Positionierungseinrichtung, die dazu eingerichtet ist, die Halteeinrichtung und/oder den Bohrer zu bewegen, um Position des Vorform-Rohlings und/oder des Bohrers so einzustellen, dass eine während des Bohrens auftretende Drift des Bohrers eine Veränderung einer Position der Bohrung innerhalb eines Querschnitts des Vorform-Rohlings bewirkt, welche in azimutaler Richtung größer ist als in radialer Richtung. Alle Vorteile, Merkmale, und Ausgestaltungen der eingangs beschriebenen Verfahren sowie der Vorform können analog für die Vorrichtung gelten und umgekehrt.

Die Vorrichtung ist insbesondere dazu eingerichtet, das erfindungsgemäße Verfahren auszuführen und/oder eine erfindungsgemäße Vorform herzustellen. Die Halteeinrichtung ist insbesondere dazu eingerichtet, den Vorform-Rohling in einer zumindest im Wesentlichen horizontalen Ausrichtung zu halten. Der Bohrer ist insbesondere zumindest im Wesentlichen horizontal ausgerichtet.

Die Positionierungseinrichtung kann dazu eingerichtet sein, den Bohrer und die Halteeinrichtung gemeinsam zu bewegen. Die Bewegung des Bohrers und/oder der Halteeinrichtung kann eine Drehung sein. Die Drehung kann um eine Mittellängsachse des in der Halteeinrichtung gehaltenen Vorform-Rohlings oder um eine dazu parallele Achse erfolgen. Die Positionierungseinrichtung kann einen Antrieb umfassen, um den Bohrer und/oder die Halteeinrichtung zu bewegen.

In einer Ausgestaltung ist die Positionierungseinrichtung dazu eingerichtet, den Vorform-Rohling um eine Mittellängsachse des Vorform-Rohlings zu drehen. Auf diese Weise kann eine relative Drehposition des Vorform-Rohlings und des Bohrers in Bezug zur Mittellängsachse besonders einfach eingestellt werden.

Alternativ oder ergänzend kann die Positionierungseinrichtung dazu eingerichtet sein, den Vorform-Rohling oder den Bohrer im Raum zu bewegen. Dies kann beispielsweise durch zwei senkrecht zueinander ausgerichtete Translationsbewegungen in der Querschnittsebene des Vorform-Rohlings erfolgen. Typischerweise steht der Bohrer fest - abgesehen von der Rotation um seine Längsachse und dem Vorschub zur Herstellung der Bohrung - und der Vorform-Rohling wird relativ zu dem Bohrer positioniert und/oder bewegt. Durch geeignete Anordnung der Längsachse des Bohrers und der Längsachse des Vorform-Rohlings kann die Richtung der Drift wie gewünscht eingestellt werden. Die Positionierungseinrichtung dient insbesondere dazu, nach Herstellung einer Bohrung eine andere relative Position des Vorform-Rohlings in Bezug zum Bohrer einzustellen, um eine weitere Bohrung herstellen zu können, bei der die Drift ebenfalls in gewünschter Weise gelenkt wird. So können nacheinander alle Bohrungen der Vorform hergestellt werden.

Ein Verlauf der Bohrung kann mittels Ultraschall, CT-Analyse und/oder ggf. einer optischen Messmethode erfolgen. Die Halteeinrichtung kann ein Prisma zum Halten des Vorform-Rohlings aufweisen. Die Vorrichtung kann ferner einen Bohrölzuführapparat aufweisen. Der Bohrer kann ein Bohrer für ein BTA-Bohrverfahren sein. Hierbei erfolgt eine äußere Zufuhr eines Kühl- und Schmierstoffes und eine innere Abfuhr der erzeugten Späne. Zur Zufuhr des Kühl- und Schmierstoffes umfasst die Vorrichtung einen Bohrölzuführapparat (BOZA). Es wird bevorzugt eine Abdichtung am Werkstück realisiert.

Nachfolgend werden Ausführungsbeispiele der Erfindung auch anhand von Figuren näher erläutert. Merkmale der Ausführungsbeispiele können einzeln oder in einer Mehrzahl mit den beanspruchten Gegenständen kombiniert werden, sofern nichts Gegenteiliges angegeben ist. Die beanspruchten Schutzbereiche sind nicht auf die Ausführungsbeispiele beschränkt.

Es zeigen:
- Figuren 1 und 2:: Querschnittszeichnungen von Vorformen,
- Figur 3:: eine schematische Darstellung eines Bohrprozesses,
- Figur 4:: eine schematische Darstellung vor Beginn eines Bohrprozesses,
- Figuren 5 und 6:: schematische Darstellungen einer Vorrichtung,
- Figuren 7 bis 9:: schematische Darstellungen von Verfahrensschritten zur Bearbeitung eines Vorform-Rohlings,
- Figuren 10 und 11:: schematische Darstellungen von Drift bei Bohrprozessen, sowie
- Figuren 12 und 13:: schematische Darstellungen von Verfahrensschritten.

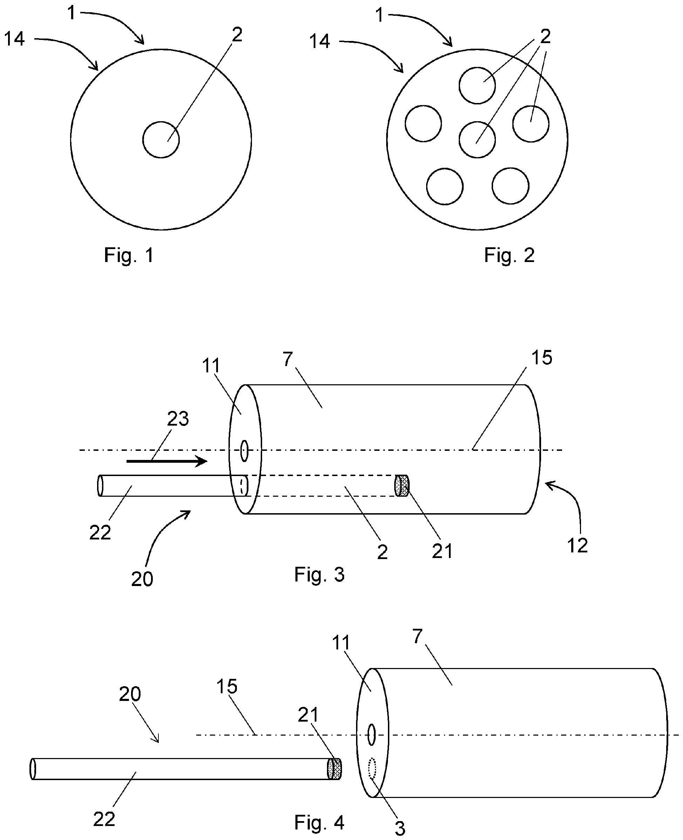

Die Figuren 1 und 2 zeigen beispielhaft Querschnitte 14 unterschiedlicher Vorformen 1. Die Vorformen weisen jeweils einen kreisförmigen Querschnitt 14 auf. Die Vorformen 1 enthalten optional eine zentrale Bohrung 2, die entlang der Mittellängsachse der jeweiligen Vorform 1 verläuft.

In Figur 2 sind neben der optionalen zentralen Bohrung 2 beispielhaft fünf exzentrische Bohrungen 2 vorhanden. Diese sind beispielsweise regelmäßig verteilt auf einem (nicht separat gekennzeichneten) Lochkreis angeordnet, der konzentrisch zur äußeren Kontur der Vorform 1 und/oder koaxial zur Mittellängsachse der Vorform 1 angeordnet sein kann.

Figur 3 zeigt schematisch ein Bohrverfahren zur Herstellung einer Bohrung 2 in einem Vorform-Rohling 7. Ein Bohrer 20 wird entlang einer Richtung 23 parallel zur Längsachse 15 des Vorform-Rohlings 7 bewegt und dreht sich insbesondere dabei um seine Längsachse. Der Bohrer 20 umfasst typischerweise einen Bohrkopf 21, der von einer Bohrstange 22 angetrieben wird. Diese Komponenten sind hier rein schematisch gezeigt; üblicherweise weist die Bohrstange 22 einen geringeren Durchmesser auf als der Bohrkopf 21. Die Bohrstange 22 wird beispielsweise von einer nicht dargestellten Antriebseinheit angetrieben.

Es ist ersichtlich, dass der Bohrer 20 an der ersten Endfläche 11 in den Vorform-Rohling 7 eingedrungen ist und von dort ausgehend die Bohrung 2 herstellt. Die Bohrung 2 ist eine exzentrische, also außermittige Bohrung. Die Längsachse des Bohrers 20 ist parallel zur Mittellängsachse 15 des Vorform-Rohlings 7 ausgerichtet. Die Position, in der der Bohrer 20 die erste Endfläche 11 kontaktiert bzw. in den Querschnitt des Vorform-Rohlings 7 eintritt, ist hier rein beispielhaft bei 6 Uhr in Blickrichtung entlang der Richtung 23.

Figur 4 zeigt eine Situation vor dem Beginn der exzentrischen Bohrung. Im Vorform-Rohling 7 kann sich bereits optional eine zentrale Bohrung befinden. Der Bohrer 20 ist derart vor der ersten Endfläche 11 positioniert, dass er durch eine translatorische Bewegung entlang seiner Längsachse bzw. der Mittellängsachse 15 die Bohrung ausführen kann. Auf der ersten Endfläche 11 ist die Bohrposition 3 des herzustellenden Bohrlochs gepunktet markiert.

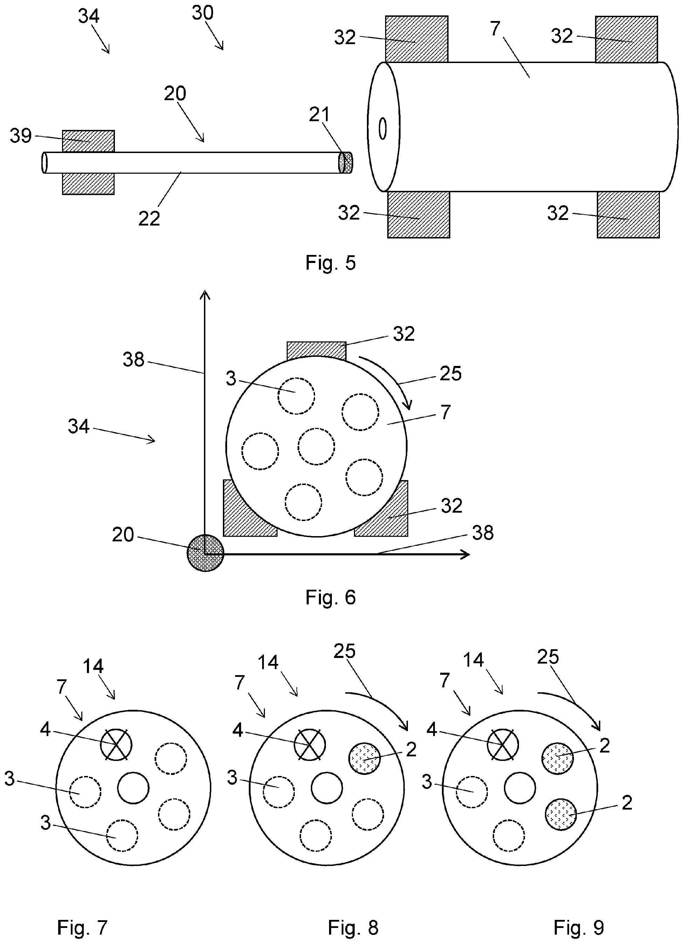

Die Figuren 5 und 6 zeigen schematische Darstellungen einiger Komponenten einer Vorrichtung 30. Der Vorform-Rohling 8 wird von Elementen einer Halteeinrichtung 32 gehalten. Die Halteeinrichtung 32 kann dazu dienen, den Vorform-Rohling 7 um seine Mittellängsachse zu drehen. So kann beispielsweise eine Position des Vorform-Rohlings 7, ggf. gemeinsam mit der Position des Bohrers 20, erfindungsgemäß eingestellt werden. Die Halteeinrichtung kann demnach Teil einer Positionierungseinrichtung 34 sein.

Auch kann mit der Halteeinrichtung 32 die Position des Vorform-Rohlings 7 in Bezug zum Bohrer 20 eingestellt werden, beispielsweise um nach der Herstellung einer ersten exzentrischen Bohrung eine zweite exzentrische Bohrung herstellen zu können, wie unten in den Figuren 7 bis 9 dargestellt. Alternativ oder ergänzend kann die Halteeinrichtung 32 dazu eingerichtet sein, den Vorform-Rohling 7 innerhalb der Ebene senkrecht zu seiner Längserstreckung zu verfahren. Beispielsweise umfasst die Halteeinrichtung 32 zwei senkrecht zueinander stehende Translationseinrichtungen 38, wie in Figur 6 schematisch dargestellt. Die Halteeinrichtung 32 kann mit einer Positionierungseinrichtung 34 zusammenwirken, um die Halteeinrichtung 32 zu bewegen. Alternativ oder ergänzend hält die Halteeinrichtung 32 den Vorform-Rohling 7 ortsfest in Position.

Der Bohrer 20 wird von einer optionalen Bohrerhalterung 39 gehalten, die dazu dienen kann, den Bohrer 20 innerhalb der Ebene senkrecht zu seiner Längserstreckung zu verfahren. Beispielsweise umfasst die Bohrerhalterung 39 zwei senkrecht zueinander stehende Translationseinrichtungen 38, wie in Figur 6 schematisch dargestellt. Es können also Translationsvorrichtungen 38 für den Vorform-Rohling 7 und/oder Translationsvorrichtungen 38 für den Bohrer 20 vorhanden sein. Die Bohrerhalterung 39 kann dazu dienen, den Bohrer 20 relativ zum Vorform-Rohling 7 zu bewegen, um die Position erfindungsgemäß einzustellen. Die Bohrerhalterung 39 kann Teil einer Positionierungseinrichtung 34 sein, um die Halteeinrichtung 32 und/oder den Bohrer 20 zu bewegen. Die Positionierungseinrichtung 34 kann die Bohrerhalterung 39 umfassen oder daraus bestehen. Die Bohrerhalterung 39 kann dazu dienen, den Bohrer 20 beim Bohren entlang seiner Längsachse vorzuschieben.

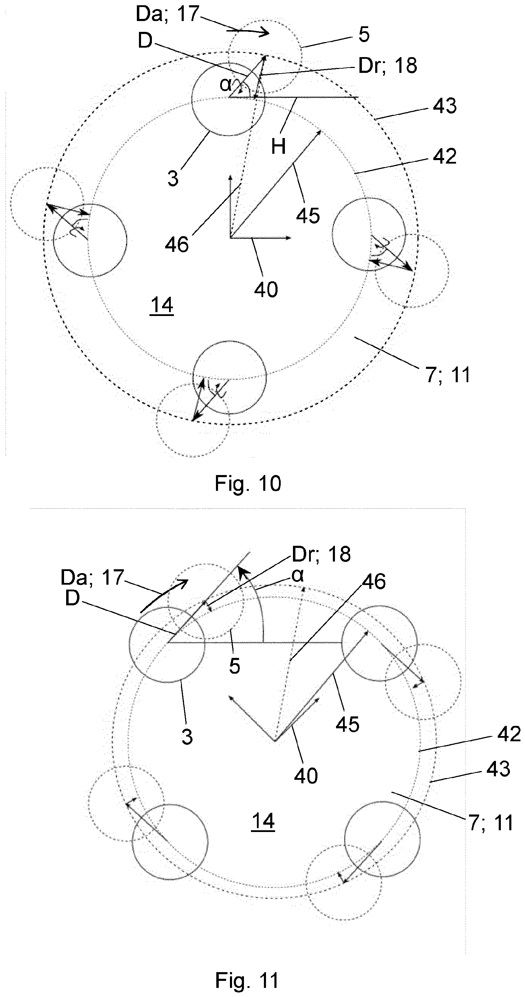

Die Figuren 7 bis 9 zeigen anhand von Querschnitten 14 eines Vorform-Rohlings 7 Verfahrensschritte zur Herstellung einer Vorform. Beispielsweise ist aufgrund vorab durchgeführter Probebohrungen oder basierend auf der Erfahrung mit einem vergleichbaren System bekannt, dass eine Drift des Bohrers nach oben rechts in Richtung ein Uhr zu erwarten ist. Dies kann bei einer beliebigen Bohrerposition ermittelt worden sein. Um die Drift in Bezug zum Querschnitt 14 des Vorform-Rohlings 7 in eine gewünschte Richtung zu lenken (vergleiche dazu die Figuren 10 und 11 unten), wurde die Position des Vorform-Rohlings 7 und/oder die mit einem Kreuz gekennzeichnete Bohrerposition 4 so gewählt, dass im Querschnitt 14 nicht senkrecht über dem Mittelpunkt des Querschnitts, entsprechend der Mittellängsachse des Vorform-Rohlings 7, gebohrt wird. Stattdessen wurde die Bohrerposition etwas nach links unten auf ungefähr 11 Uhr verschoben, um den radialen Anteil der Verschiebung zu minimieren. Insbesondere werden sämtliche Bohrungen 2 in dieser Position erzeugt.

Vor der Herstellung der ersten Bohrung kann die benötigte Position durch Positionierung bzw. Bewegen des Vorform-Rohlings 7 und/oder des Bohrers eingestellt werden. Der Vorform-Rohling 7 kann translatorisch bewegt, also verschoben werden, beispielsweise in der Ebene seines Querschnitts 14, und/oder um eine beispielsweise parallel zur Mittellängsachse ausgerichtete Drehachse gedreht werden. Alternativ oder ergänzend kann der Bohrer translatorisch bewegt, also verschoben werden, beispielsweise in der Ebene seines Querschnitts 14, und/oder um eine beispielsweise parallel zur Mittellängsachse ausgerichtete Drehachse gedreht werden.

Figur 7 zeigt die Situation vor oder während der Durchführung der ersten, exzentrischen Bohrung. Es kann optional zuvor eine zentrischen Bohrung erzeugt worden sein. An der mit dem Kreuz markierten Bohrerposition 4 befindet sich der Bohrer, so dass mittels Translation entlang der Mittellängsachse die Bohrung hergestellt werden kann. Es sind mit gestrichelten Linien ferner Bohrpositionen 3 eingezeichnet, an denen ebenfalls Bohrungen erzeugt werden sollen.

Nach Herstellung der Bohrung erfolgt eine Bewegung, die einer Rotation 25 des Vorform-Rohlings 7 im Uhrzeigersinn um die Mittellängsachse des Vorform-Rohlings 7 um einen definierten Winkel entspricht. Dies ist in Figur 8 dargestellt. Der Winkel berechnet sich bei der hier gleichmäßig beabstandeten Anordnung der Bohrlöcher als 360° / n, wobei n die Anzahl der herzustellen Bohrlöcher ist. Hier sollen rein beispielhaft fünf Bohrlöcher erzeugt werden, der Winkel beträgt also 72°. Nach der Rotation ist die fertiggestellte Bohrung 2 oben rechts auf ungefähr zwei Uhr angeordnet und die Bohrerposition 4 befindet sich vor der nächsten herzustellenden Bohrung auf ungefähr 11 Uhr.

Es ist einfach und zweckmäßig, zur Veränderung des Winkels wie dargestellt den Vorform-Rohling 7 um seine Mittellängsachse zu drehen. Der Bohrer kann dann ortsfest verbleiben. Es ist jedoch nicht ausgeschlossen, stattdessen oder ergänzend den Vorform-Rohling zu verschieben, um eine andere Achse zu drehen und/oder den Bohrer zu verschieben und/oder zu drehen. Die Position des Bohrers und des Vorform-Rohlings im Raum kann gleich bleiben oder sich verändern. Maßgeblich ist lediglich, dass bezogen auf die Schwerkraftrichtung dieselbe relative Position des Vorform-Rohlings 7 zum Bohrer eingestellt wird, also hier ungefähr 11 Uhr, sodass die Drift wieder wie gewünscht gelenkt werden kann.

Der oben beschriebene Schritt wird wiederholt, wie in Figur 9 dargestellt, um die nächste Bohrung 2 zu erzeugen. Nach zwei weiteren, nicht dargestellten Wiederholungen sind alle Bohrungen 2 fertiggestellt.

Die Figuren 10 und 11 zeigen Ausschnitte von Querschnitten 14 von Vorformen zur Illustration der Drift in herkömmlichen Verfahren (Figur 10) und im erfindungsgemäßen Verfahren (Figur 11). Es sollen beispielhaft vier Bohrungen erzeugt werden, die sich im Querschnitt 14 gleichmäßig auf einem Lochkreis liegen sollen. Dieser ist als innenliegender Soll-Lochkreis 43 gepunktet dargestellt. Die mit durchgezogenen Linien markierten Bohrpositionen 3 liegen so, dass der Mittelpunkt einer jeweiligen Bohrung auf dem Soll-Lochkreis 43 liegt. Die Darstellung zeigt die Aufsicht auf die erste Endfläche, an der die Bohrungen starten. Die Bohrposition liegt hier mittig über dem Mittelpunkt des Querschnitts. Im Idealfall sollte die Bohrung an derselben Stelle auf demselben Lochkreis an der gegenüberliegenden zweiten Endfläche enden.

Es ergibt sich allerdings eine Drift, die zu abweichenden Positionen der Bohrungen an dem Punkt führt, an dem der Bohrer sich am Ende bzw. nach der Herstellung der Bohrung befindet. Diese Positionen sind anhand der gestrichelt gezeichneten Endpositionen 5 des Bohrers dargestellt. Es zeigt sich, dass der Bohrer im Verlauf der Bohrung nach oben rechts wandert, und zwar gemäß dem Winkel α in Bezug zur Horizontalen H, die senkrecht zur Schwerkraftrichtung steht. Es sind die resultierende Drift D sowie die Radialkomponente Dr und die Azimutalkomponente Da eingezeichnet. Die Radialkomponente Dr verläuft in radialer Richtung 18 und die Azimutalkomponente Da verläuft in azimutaler Richtung 17. Ferner ist ein Koordinatensystem 40 eingezeichnet, dessen Ursprung im Mittelpunkt des Querschnitts liegt. Davon ausgehend sind der Soll-Radius 45 und der Ist-Radius 46 des jeweiligen Lochkreises eingezeichnet. Der Soll-Radius 45 des Soll-Lochkreises 42 ist der an der ersten Endfläche 11 vorliegende Radius. Der Ist-Radius 46 des Ist-Lochkreises 43 ist der an der zweiten Endfläche vorliegende, aufgrund der Drift verschobene Radius. Die Radialkomponente Dr entspricht der effektiven Änderung des Radius.

Figur 11 zeigt dieselbe Situation bei Einstellung einer Position des Vorform-Rohlings 7 und/oder des Bohrers so, dass die Drift eine Veränderung einer Position der Bohrung innerhalb des Querschnitts 14 bewirkt, die in azimutaler Richtung 17 größer ist als in radialer Richtung 18. Die Bezeichnungen sind dieselben wie in Figur 11, so dass lediglich auf die Unterschiede eingegangen wird.

Der Winkel α ist derselbe. Allerdings ist aufgrund der gewählten relativen Position des Bohrers und des Vorform-Rohlings 7 in Bezug zur Schwerkraftrichtung, die hier beispielhaft einer Bohrposition 3 zwischen 10 Uhr und 11 Uhr entspricht. Es zeigt sich, dass die Drift D dieselbe Größe und Richtung hat wie in der in Figur 10 gezeigten Situation. Allerdings ist aufgrund der veränderten Position die Radialkomponente Dr wesentlich geringer und die Azimutalkomponente Da wesentlich größer. Das Verhältnis von Da zu Dr liegt bei ungefähr 3,8. Der Ist-Lochkreis 43 weicht wesentlich weniger vom Soll-Lochkreis 42 ab. Auf diese Weise kann die Qualität der Vorform und somit der daraus hergestellten optischen Faser signifikant verbessert werden. Es ist zudem ersichtlich, dass eine weitere Drehung der relativen Position des Bohrers und des Vorform-Rohlings entgegen dem Urzeigersinn, also eine Veränderung der azimutalen Lage der Bohrposition in Bezug zur Schwerkraftrichtung, eine weitere Reduzierung der Radialkomponente Dr ermöglichen würde. Die Drift würde dann tangential zum Soll-Lochkreis 42 verlaufen und nur eine minimale Radialkomponente aufweisen.

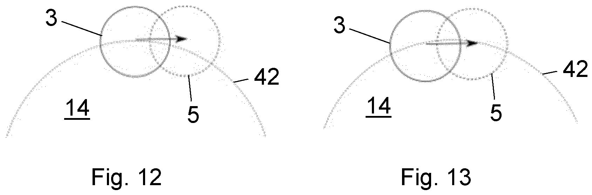

Die Figuren 12 und 13 zeigen in ähnlicher Weise Ausschnitte eines Querschnitts 14. Jeweilige Pfeile zeigen die Drift von der Bohrposition zur Endposition 5 an. Die Figuren sind zur Veranschaulichung und abweichend von den tatsächlichen Verhältnissen um den Mittelpunkt des Querschnitts 14 gedreht. Figur 12 entspricht im Wesentlichen der Situation aus Figur 11 oder einer noch weitere optimierten relativen Position, in der einmalig vor der Bohrung eine gewünschte Position eingestellt wird und eine tangentiale Drift vorliegt, sodass noch eine gewisse Radialkomponente der Drift vorhanden ist.

In Figur 13 dagegen ist eine kontinuierliche oder quasi-kontinuierliche Veränderung der Position erfolgt. Beispielsweise sind Bohrer und Vorform-Rohling nach Herstellung eines ersten Abschnitts der Bohrung gemeinsam und/oder gleichzeitig weitergedreht worden und es ist anschließend ein weiterer Abschnitt der Bohrung hergestellt worden. Dies entspricht einem quasi-kontinuierlichen Verfahren und kann beliebig oft wiederholt worden sein. Alternativ oder ergänzend können Bohrer und Vorform-Rohling während des Bohrens gemeinsam und gleichzeitig im Raum und/oder in Bezug zur Schwerkraftrichtung gedreht worden sein. Dies entspricht einem kontinuierlichen Verfahren. Es resultiert eine stetig angepasst Drift, die im Resultat ausschließlich azimutal verläuft, wie der vereinfacht geradlinig dargestellte Pfeil anzeigt.

### Bezugszeichenliste

| | |
|---|---|
| Vorform | 1 |
| Bohrung | 2 |
| Bohrposition | 3 |
| Bohrerposition | 4 |
| Endposition | 5 |
| Vorform-Rohling | 7 |
| Erste Endfläche | 11 |
| Zweite Endfläche | 12 |
| Querschnitt | 14 |
| Mittellängsachse | 15 |
| Azimutale Richtung | 17 |
| Radiale Richtung | 18 |
| Bohrer | 20 |
| Bohrkopf | 21 |
| Bohrstange | 22 |
| Richtung | 23 |
| Rotation | 25 |
| Vorrichtung | 30 |
| Halteeinrichtung | 32 |
| Positionierungseinrichtung | 34 |
| Translationseinrichtung | 38 |
| Bohrerhalterung | 39 |
| Koordinatensystem | 40 |
| Soll-Lochkreis | 42 |
| Ist-Lochkreis | 43 |
| Soll-Radius | 45 |
| Ist-Radius | 46 |
| Drift | D |
| Radialkomponente | Dr |
| Azimutalkomponente | Da |
| Horizontale | H |
| Winkel | α |

## Patentansprüche

1. Verfahren zur Bearbeitung eines Vorform-Rohlings (7) zur Herstellung einer Vorform (1) einer Multi-Kernfaser, bei dem unter Verwendung eines Bohrers (20) eine exzentrische Bohrung (2) in dem Vorform-Rohling (7) hergestellt wird, welche sich entlang einer Längserstreckung des Vorform-Rohlings (7) erstreckt, wobei eine Position des Vorform-Rohlings (7) und/oder des Bohrers (20) so gewählt wird, dass eine während des Bohrens auftretende Drift (D) des Bohrers (20) eine Veränderung einer Position der Bohrung (2) innerhalb eines Querschnitts (14) des Vorform-Rohlings (7) bewirkt, welche in azimutaler Richtung (17) größer ist als in radialer Richtung (18).

2. Verfahren nach dem vorhergehenden Anspruch, wobei der Vorform-Rohling (7) und der Bohrer (20) im Wesentlichen horizontal ausgerichtet sind.

3. Verfahren nach einem der vorhergehenden Ansprüche, ferner umfassend Einstellen einer gewünschten Drehposition des Vorform-Rohlings (7) und des Bohrers (20) um eine Mittellängsachse (15) des Vorform-Rohlings (7).

4. Verfahren nach einem der vorhergehenden Ansprüche, wobei die Position des Vorform-Rohlings (7) und des Bohrers (20) so ist, dass sich der Bohrer (20) in Bezug zur Schwerkraftrichtung in einer anderen Position befindet als genau oberhalb einer Mittellängsachse (15) des Vorform-Rohlings (7).

5. Verfahren nach einem der vorhergehenden Ansprüche, wobei die zu wählende Position des Vorform-Rohlings (7) und/oder des Bohrers (20) anhand zumindest einer zuvor ermittelten Richtung der Drift (D) ermittelt wird.

6. Verfahren nach dem vorhergehenden Anspruch, wobei vor dem Herstellen der Bohrung (2) eine Probebohrung in einem Probe-Vorform-Rohling hergestellt wird und zumindest eine Richtung der Drift (D) bei der Probebohrung ermittelt wird.

7. Verfahren nach einem der vorhergehenden Ansprüche, wobei zwischen der Herstellung eines ersten Abschnitts der Bohrung (2) und der Herstellung eines zweiten Abschnitts der Bohrung (2) die Position des Vorform-Rohlings (7) und/oder des Bohrers (20) verändert wird.

8. Verfahren nach einem der vorhergehenden Ansprüche, wobei zumindest zeitabschnittsweise zeitgleich mit der Herstellung der Bohrung (2) die gemeinsame Position des Vorform-Rohlings (7) und des Bohrers (20) im Raum verändert wird.

9. Verfahren nach einem der vorhergehenden Ansprüche, wobei nach der Herstellung der Bohrung (2) der Vorform-Rohling (7) um seine Mittellängsachse (15) relativ zum Bohrer (20) gedreht wird und anschließend eine weitere Bohrung (2) hergestellt wird.

10. Verfahren nach einem der vorhergehenden Ansprüche, wobei die Position des Vorform-Rohlings (7) und/oder des Bohrers (20) so gewählt wird, dass die Veränderung der Position der Bohrung (2) in azimutaler Richtung (17) um einen Faktor von wenigstens 2, insbesondere wenigstens 4, größer ist als in radialer Richtung (18).

11. Verfahren zur Herstellung einer Vorform (1) für eine Multi-Kernfaser, umfassend das Verfahren gemäß einem der vorhergehenden Ansprüche.

12. Vorform (1) für eine Multi-Kernfaser, herstellbar mit dem Verfahren gemäß einem der Ansprüche 1 bis 10, wobei die Vorform (1) eine exzentrische Bohrung (2) enthält, die sich entlang einer Längserstreckung der Vorform (1) erstreckt, wobei sich eine Position der Bohrung (2) innerhalb eines Querschnitts (14) der Vorform (1) über die Längserstreckung der Vorform (1) ändert, wobei eine im Querschnitt (14) der Vorform (1) betrachtete Veränderung der Position in azimutaler Richtung (17) größer ist als in radialer Richtung (18).

13. Vorform (1) nach dem vorhergehenden Anspruch, wobei die Vorform (1) mindestens zwei exzentrische Bohrungen (2) enthält, die sich entlang der Längserstreckung der Vorform (1) erstrecken und deren Positionen sich über die Längserstreckung der Vorform (1) innerhalb des Querschnitts (14) der Vorform (1) in gleicher Richtung entlang einer gekrümmten Linie um eine Mittellängsachse (15) der Vorform (1) ändern.

14. Vorrichtung (30) zur Bearbeitung eines Vorform-Rohlings (7) zur Herstellung einer Vorform (1) einer Multi-Kernfaser, umfassend eine Halteeinrichtung (32) zum Halten eines Vorform-Rohlings (7), einen Bohrer (20) zum Herstellen einer exzentrischen Bohrung (2) in dem Vorform-Rohling (7) und eine Positionierungseinrichtung (34), die dazu eingerichtet ist, die Halteeinrichtung (32) und/oder den Bohrer (20) zu bewegen, um eine Position des Vorform-Rohlings (7) und/oder des Bohrers (20) so einzustellen, dass eine während des Bohrens auftretende Drift (D) des Bohrers (20) eine Veränderung einer Position der Bohrung (2) innerhalb eines Querschnitts (14) des Vorform-Rohlings (7) bewirkt, welche in azimutaler Richtung (17) größer ist als in radialer Richtung (18).

15. Vorrichtung nach dem vorhergehenden Anspruch, wobei die Positionierungseinrichtung (34) dazu eingerichtet ist, den Vorform-Rohling (7) um eine Mittellängsachse (15) des Vorform-Rohlings (7) zu drehen.
